# EUROPEAN PATENT SPECIFICATION

(11) **EP 3 442 065 B1**
(45) Date of publication and mention of the grant of the patent: **14.10.2020**
(21) Application number: 17778864.3
(22) Date of filing: 15.02.2017
(51) Int. Cl.: H01M 8/2475, F16J 15/06

(54) **POWER GENERATION DEVICE**
STROMERZEUGUNGSVORRICHTUNG
DISPOSITIF DE GÉNÉRATION D'ÉNERGIE

(30) Priority: 06.04.2016 JP 2016076263
(43) Date of publication of application: 13.02.2019
(73) Proprietor: Panasonic Intellectual Property Management Co., Ltd., Osaka-shi, Osaka 540-6207 (JP)
(72) Inventor: SAIKI Naofumi, 1-16, Shiromi 2-chome, Chuo-ku, Osaka-shi, Osaka 540-6207/jp (JP); YAMAMOTO Shinya, 1-16, Shiromi 2-chome, Chuo-ku, Osaka-shi, Osaka 540-6207/jp (JP); MORI Yoshihiro, 1-16, Shiromi 2-chome, Chuo-ku, Osaka-shi, Osaka 540-6207/jp (JP); MIZUTANI Yuta, 1-16, Shiromi 2-chome, Chuo-ku, Osaka-shi, Osaka 540-6207/jp (JP)
(74) Representative: Grünecker Patent- und Rechtsanwälte PartG mbB
(86) International application number: PCT/JP2017/005495
(87) International publication number: WO 2017/175485

(56) References cited:
- JP-A- 2005 183 651
- JP-A- 2013 144 300
- JP-A- 2013 191 324
- JP-A- 2015 141 991
- JP-A- 2015 141 991
- JP-A- 2015 155 711
- US-A1- 2014 255 818

## Description

### TECHNICAL FIELD

The present invention relates to a power generator including fuel cells that generate power through reaction of hydrogen with oxygen.

### BACKGROUND ART

A fuel cell power generator includes fuel cells that generate power through electrochemical reaction with hydrogen-containing fuel gas and oxidant gas being supplied to an anode and a cathode, respectively. The hydrogen-containing fuel gas can be supplied from a hydrogen cylinder.

In some fuel cell power generators, fuel processors are included as supply sources of fuel gas. The fuel processor generates hydrogen-containing fuel gas through steam reforming reaction of raw materials that are supplied from an infrastructure, such as city gas and liquefied petroleum (LP) gas. The hydrogen-containing fuel gas generated by the fuel processor is then supplied to the anode, and the oxidant gas is supplied to the cathode, whereby electrochemical reaction takes place for power generation.

A generally known housing of a fuel cell power generator including fuel cells includes a base, an exterior panel erected from the base, and a top panel provided at an upper end of the exterior panel (refer to, for example, PTL 1 or PTL 2).

A structure disclosed in PTL 1 includes a turntable mechanism beneath a housing and has exterior panels that are openable on hinges.

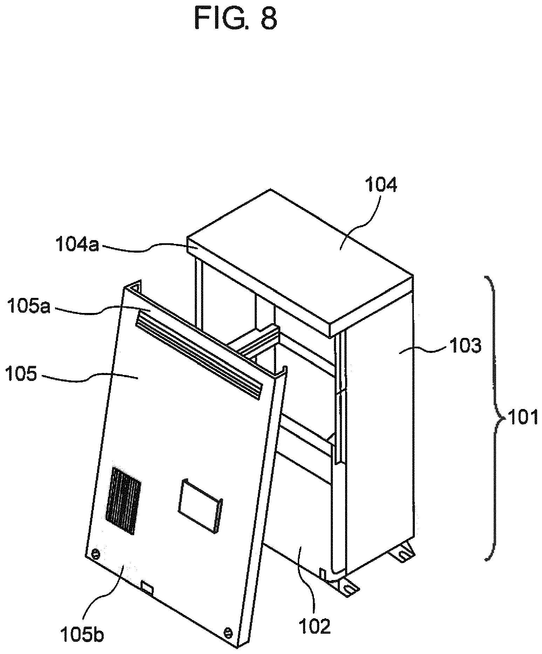

PTL 2 discloses such a housing of a fuel cell power generator that a front panel can detached with ease in a relatively small installation space. FIG. 8 is an exploded perspective view illustrating a structure of the conventional fuel cell power generator disclosed in PTL 2.

As shown in FIG. 8, housing 101 of the conventional fuel cell power generator described in PTL 2 includes base 102, exterior panel 103 erected from base 102, and top panel 104 provided at an upper end of exterior panel 103.

Front panel 105 forms a part of exterior panel 103 and has its upper end 105a removably inserted to be on an inner side of end 104a of top panel 104, while its lower end 105b is detachably secured to base 102.

On the other hand, there is a package type fuel cell power generator that is proposed with a view to indoor installation (refer to, for example, PTL 3).

To be installed indoors, the package type fuel cell power generator disclosed in PTL 3 needs an air intake duct that introduces air to be consumed in power generation and ventilation air from the outdoors, an exhaust duct through which discharge air from a power generation device is released, and a ventilation discharge air duct through which ventilation discharge air is released outdoors from inside the package type fuel cell power generator. Moreover, ensured airtightness between an interior and an exterior of the package type fuel cell power generator is a requirement for safety.

Also proposed is a structure in which a front panel is closed via a packing to ensure airtightness of a housing (refer to, for example, PTL 4).

In the conventional techniques, airtightness of the housing of the fuel cell power generator is taken into account; however, a cost that is incurred in ensuring airtightness is not fully considered.

When the fuel cell power generator of PTL 2 in particular is studied for ensuring airtightness of housing 101, a packing that has sealing performance is conceivably formed along a part where front panel 105 of exterior panel 103 comes into contact with other members of housing 101.

In addition, packings each having sealing performance are conceivably formed along a part of contact between base 102 and exterior panel 103 and a part of contact between exterior panel 103 and top panel 104, respectively.

In cases where exterior panel 103 is divided into twin side panels and a back panel as in the fuel cell power generator disclosed in PTL 2, packings each having sealing performance are conceivably formed along a part of contact between a first of the side panels and the back panel and a part of contact between a second of the side panels and the back panel, respectively.

Base 102, the panels that form exterior panel 103, and top panel 104 are then fixed by screws. In such cases, the parts to be fixed are screwed via the respective packings that are compressed, so that airtightness is ensured among the panels. Upper end 105a of front panel 105 is removably inserted to be on the inner side of end 104a of top panel 104, while lower end 105b of front panel 105 is screwed to base 102.

In such cases, the packing is compressed along the whole periphery of front panel 105, so that airtightness of housing 101 as a whole can be ensured.

Airtight performance of a housing of a forced flue type fuel cell power generator intended for indoor installation is specified even in European Norm (EN) standards (unified European standards). Fitting parts of a housing exterior are each formed with a packing, and factory shipment is made with sufficient airtight performance confirmed.

However, an exterior maintenance panel is opened in many situations, such as during installation and maintenance of the fuel cell power generator.

### Citation List

### Patent Literatures

PTL 1: Unexamined Japanese Patent Publication No. 2008-235092
PTL 2: Unexamined Japanese Patent Publication No. 2013-191324
PTL 3: Unexamined Japanese Patent Publication No. 2006-253020
PTL 4: Unexamined Japanese Patent Publication No. 2015-155711

Document JP 2013 144300 A discloses a vehicle body hemming part structure configured to fold back an edge part 1a of an outer panel 1 so as to wrap the edge part around an edge part 2a of an inner panel 2 while interposing the adhesive agent 4 between the outer panel 1 and the inner panel 2 to form the hemming part 3, and further to bend a hem press surface 12 of the hemming part 3 in the folding back direction after the hemming part 3 is formed.

Document US 2014/255818 A1 discloses a fuel cell system which includes a compression retention enclosure with upper and lower compression shells and side sheet components coupled by interlocking hem joints. A compression shell may be formed from a light weight composite structure having a polymeric layer interposed between steel skins, and an extension of the top steel skin may form a hemmed edge or may form a side sheet having a hemmed edge. Side sheet panels may be coupled to the end plates by interlocking two opposing hemmed edges to form the hem joint, or by sliding an opposing C-linking element between two hemmed edges held under compression force in an interlocking position.

Document JP 2015 141991 A teaches a packing attachment mechanism 201 of a housing case 100 including a housing 20 in which an opening 21 is formed and an annular packing 10 attached to a periphery of the opening 21 includes a bent part 24 formed by bending a circumference of the opening 21. The bent part 24 includes a step part 29 having a step 291 lower than a height L2 of the packing 10. The packing attachment mechanism is capable of positioning a packing and regulating a compression amount without increasing the number of components.

### SUMMARY OF THE INVENTION

Ensuring sufficient housing airtightness problematically leads to an increased parts count and an increased cost. It is therefore desirable that while maintenance work is taken into account, sufficient housing airtightness should be ensured with a simple structure in a power generator, particularly in a fuel cell power generator.

The present invention provides a power generator that can ensure sufficient airtightness of a housing with a simple structure.

A power generator of the present invention includes a housing that has an opening and accommodates a power generation device configured to generate power through use of raw fuel and oxidant gas, and a lid disposed to cover the opening of the housing. The housing includes a first panel having a first end that is obtained by hemming, and a second panel having a second end that is plate-shaped, and the first panel and the second panel are disposed such that the first end and the second end touch each other. The first end and the second end are fixed to each other by a fastening member in a closely fitting manner through use of springiness of the first end obtained by the hemming.

In this structure, a connection between the panels that are not expected to separate during maintenance work can ensure sufficient airtightness of the housing with such a simple and low-cost structure because the first end and the second end are fixed to each other by the fastening member in the closely fitting manner through use of the springiness of the first end that is obtained by the hemming.

### BRIEF DESCRIPTION OF DRAWINGS

FIG. 1 is a schematic sectional view illustrating a housing and a lid of a power generator according to an exemplary embodiment of the present invention.
FIG. 2 is an enlarged detail of part A of FIG. 1 with a fastening member included.
FIG. 3 is an enlarged detail of part A of FIG. 1 with another fastening member not of the invention included.
FIG. 4A is a perspective view illustrating the housing integral with the lid in the power generator according to the exemplary embodiment of the present invention.
FIG. 4B is a perspective view illustrating the housing and the lid of the power generator in a separated state according to the exemplary embodiment of the present invention.
FIG. 5 is a schematic sectional view illustrating a housing and a lid in a modification made to the power generator according to the exemplary embodiment of the present invention.
FIG. 6 is an enlarged detail of part B of FIG. 5 with a fastening member included.
FIG. 7 is a schematic sectional view illustrating a housing and a lid in another modification made to the power generator according to the exemplary embodiment of the present invention.
FIG. 8 is an exploded perspective view illustrating structure of a conventional fuel cell power generator.

### DESCRIPTION OF EMBODIMENT

An exemplary embodiment of a power generator according to the present invention is hereinafter described with reference to the accompanying drawings. It is to be noted that the present exemplary embodiment is not restrictive of the present invention.

### (Exemplary embodiment)

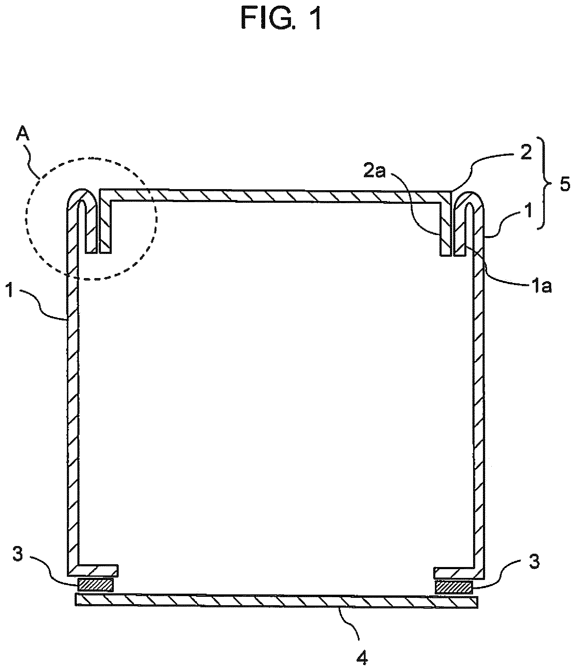

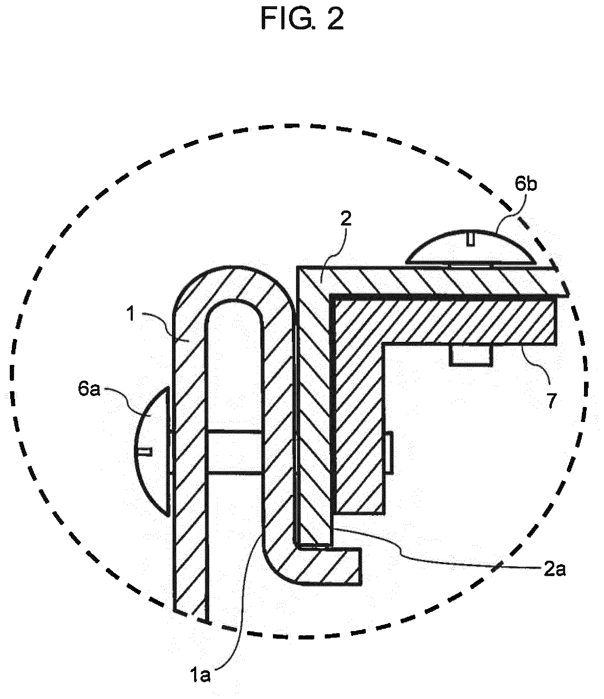

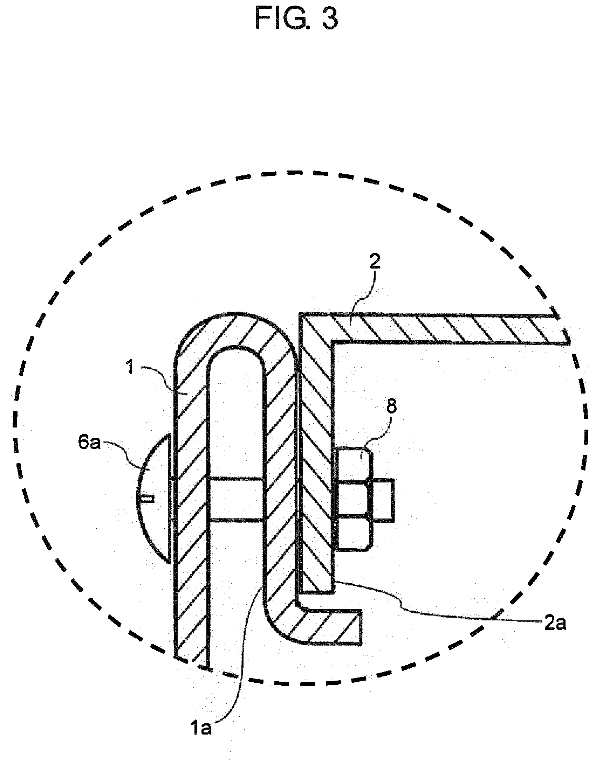

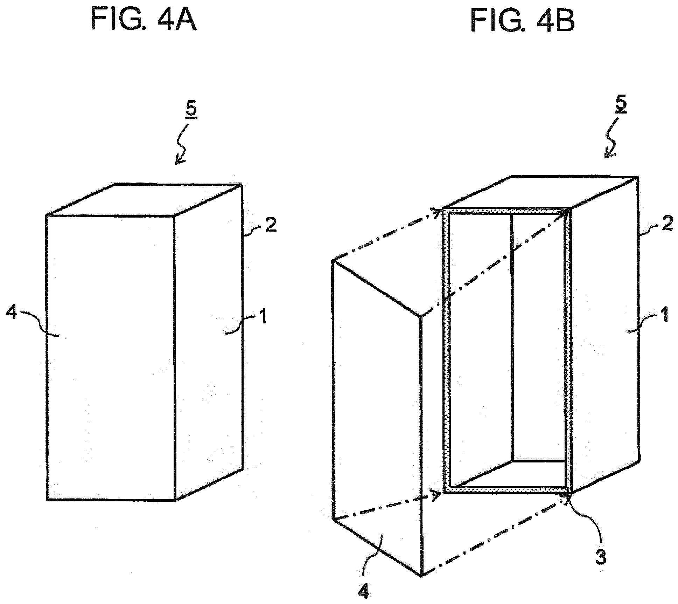

FIGS. 1, 2, 4A and 4B are structural illustrations of a housing and a lid of a power generator according to the exemplary embodiment of the present invention. FIG. 1 is a schematic sectional view of the housing and the lid of the power generator as seen from above according to the present exemplary embodiment. FIG. 2 is an enlarged detail of part A of FIG. 1, illustrating the power generator's housing fixed by a fastening member according to the present exemplary embodiment. FIG. 3 is an enlarged detail of part A of FIG. 1, illustrating the power generator's housing fixed by another fastening member not according to the invention. FIG. 4A is a perspective view illustrating the lid integral with the housing in the power generator according to the present exemplary embodiment. FIG. 4B is a perspective view illustrating the lid and the housing of the power generator in a separated state according to the present exemplary embodiment.

As shown in FIG. 1, housing 5 of the power generator according to the present exemplary embodiment is such that a pair of left and right side plates 1 that is disposed as first panels and is made of metal have their respective first ends 1a disposed to respectively touch twin second ends 2a of back plate 2 that is a second panel and is made of metal.

Although FIGS. 1 to 3 show a clearance between first end 1a of side plate 1, which is the first panel, and second end 2a of back plate 2, which is the second panel, for convenience of illustration, it is to be noted that first end 1a of side plate 1 and second end 2a of back plate 2 are fixed in a closely fitting manner in an actual structure, so that the clearance is virtually nonexistent in a closely fitted part.

Side plate 1's first end 1a that touches back plate 2 is obtained by hemming (a process in which folding back is carried out inwardly), thus being of inwardly folded U-shape. Back plate 2's second end 2a that touches side plate 1 is bent forward (in a direction of lid 4) into an L shape, thus being a forwardly bent L-shaped plate.

Side plate 1, which is the first panel, and back plate 2, which is the second panel, are such that side plate 1's first end 1a that is inwardly folded by the hemming and back plate 2's plate-shaped second end 2a that is bent forward into the L shape touch each other at their respective planes. As shown in FIG. 2, while having its head exposed at an outer surface of side plate 1, bolt 6a is passed through first end 1a that is obtained by the hemming and plate-shaped second end 2a that is bent into the L shape. Frame 7 of L-shaped section is fixed to an inner surface of the forwardly bent L-shaped part of back plate 2 by bolt 6b with its corner mating with a corner of back plate 2. Bolt 6a passed through first end 1a and second end 2a reaches frame 7 and using frame 7, fastens first end 1a and second end 2a.

More specifically, the fastening member (including bolt 6a and frame 7) is used for fastening, with bolt 6a passed through three metal plates that are formed of U-shaped first end 1a obtained by the hemming and plate-shaped second end 2a that is bent into the L-shape.

In the present exemplary embodiment, the plane formed at first end 1a of side plate 1, which is the first panel, and the plane formed at second end 2a of back plate 2, which is the second panel, are closely fitted to each other through use of springy resistance of U-shaped first end 1a obtained by the hemming with pressure applied by the fastening member including bolt 6a and frame 7, whereby sufficient airtightness is ensured.

It is to be noted that the sufficient housing airtightness mentioned here is designed in conformity with standards (e.g. EN standards) to suppress a gas flow between an interior defined by housing 5 and lid 4 and an exterior of housing 5 and lid 4 to not more than a predetermined condition and thus is not limited to an airtight state that is achieved by complete sealing.

In place of frame 7, nut 8 may be used, as shown in FIG. 3, to touch the inner surface of back plate 2's plate-shaped second end 2a that is bent into the L-shape. Even in such a structure, the plane formed at first end 1a of side plate 1, which is the first panel, and the plane formed at second end 2a of back plate 2, which is the second panel, can closely be fitted to each other through use of the springy resistance of U-shaped first end 1a obtained by the hemming with pressure applied by a fastening member including bolt 6a and nut 8.

However, in cases where nut 8 is used as a part of the fastening member, contrivance such as fixing nut 8 to the inner surface of second end 2a is required to prevent nut 8 from falling or rotating idly. As compared with the use of frame 7, the use of nut 8 easily causes uneven fitting force between the plane formed at first end 1a of side plate 1 and the plane formed at second end 2a of back plate 2.

In the present exemplary embodiment, a leading end of side plate 1's first end 1a that is folded inwardly into the U shape is bent into an L shape to be substantially parallel with back plate 2 as shown in FIG. 2, thereby preventing, as a reinforcement, undulation of inwardly folded U-shaped first end 1a of side plate 1 and suppressing displacement between side plate 1 and back plate 2.

A similar structure is used at a connection between a top plate of housing 5 and back plate 2 as well as at a connection between a base plate of housing 5 and back plate 2. In other words, the top plate (not illustrated) and the base plate (not illustrated) have respective ends that touch back plate 2, and these ends are obtained by hemming (the process in which folding back is carried out inwardly), thus being of inwardly folded U'shape. A top-plate-side end and a base-plate-side end of back plate 2 are bent forward into L shapes, thus being of forwardly bent plate shape.

The respective inwardly folded parts of the top and base plates that are obtained by the hemming (the process in which folding back is carried out inwardly) are respectively brought into contact with respective planes of the forwardly bent L-shaped parts of back plate 2 at their respective planes, and bolts (not illustrated) that are similar to bolt 6a and frames (not illustrated) that are similar in shape to frame 7 are used as fastening members for fastening.

A similar structure is also used at each connection between the top plate (not illustrated) of housing 5 and side plate 1 as well as at each connection between the base plate (not illustrated) of housing 5 and side plate 1. The top plate's ends and the base plate's ends that touch side plate 1 are obtained by hemming (the process in which folding back is carried out inwardly), thus being of inwardly folded U-shape.

A top-plate-side end and a base-plate-side end of each of side plates 1 are bent inward into L shapes, thus being inwardly bent L-shaped plates. The inwardly folded parts of the top and base plates that are obtained by the hemming (the process in which folding back is carried out inwardly) are respectively brought into contact with respective planes of the inwardly bent L-shaped parts of side plates 1 at their respective planes, and bolts (not illustrated) that are similar to bolt 6a and frames (not illustrated) that are similar in shape to frame 7 are used as fastening members for fastening.

In the above exemplary embodiment, the end that is obtained by the hemming is first end 1a, the panel having first end 1a is the first panel, the plate-shaped end is second end 2a, and the panel having second end 2a is the second panel. As such, side plates 1 shown in FIGS. 1 to 3 are the first panels while back plate 2 shown in FIGS. 1 to 3 is the second panel. However, in their respective cases with respect to the top plate (not illustrated) or the base plate (not illustrated), side plates 1 are second panels, while the top plate or the base plate that has the ends obtained by the hemming is a first panel.

It is to be noted here that housing 5 is formed to include the top plate, the base plate, side plates 1, and back plate 2.

As shown in FIG. 1 and FIG. 4B, seal 3 is interposed between a forward opening of housing 5 and lid 4 for fixing in a closely fitting manner. Although FIG. 1 shows clearances among side plate 1, seal 3, and lid 4 for convenience of illustration, it is to be noted that side plate 1, seal 3, and lid body 4 are mutually fixed in the closely fitting manner in an actual structure, so that the clearances are virtually nonexistent in respective closely fitted parts. In FIG. 4A, lid 4 is shown as being integral with housing 5 at the forward opening.

In the present exemplary embodiment, the side plate 1's end that touches back plate 2 is obtained by the hemming (the process in which folding back is carried out inwardly), while the side-plate-side end of back plate 2 is bent forward into the L shape; however, the present invention is not limited to this. Structurally, the panels have only to be closely fitted to each other at their respective planes through use of springy resistance of the U-shaped part obtained by the hemming (folding back) with pressure applied by the fastening member.

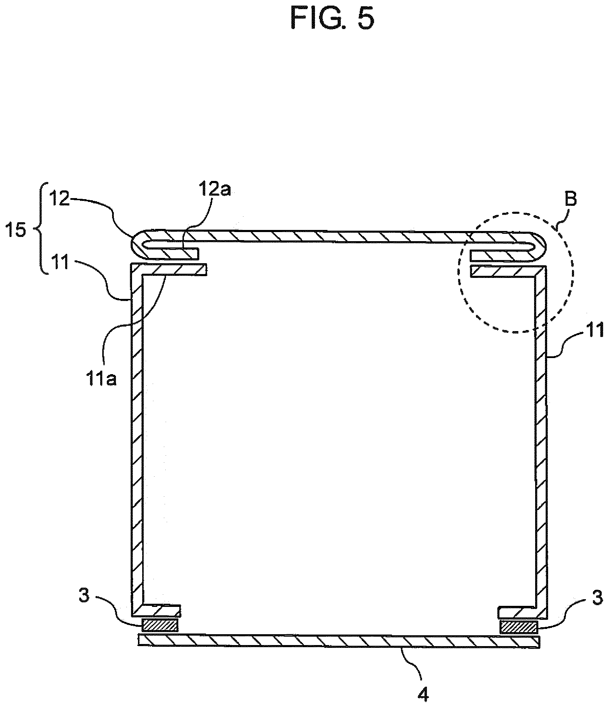

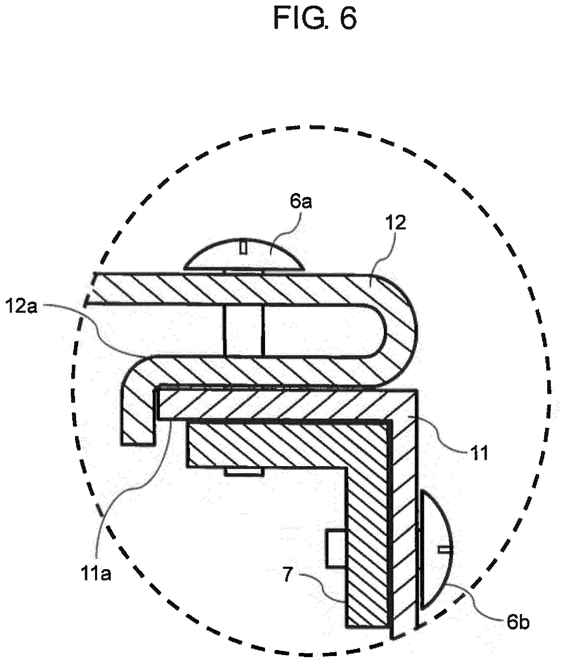

For example, as shown in FIG. 5 and FIG. 6 that is an enlarged view of part B of FIG. 5, housing 15 may be of such a reverse structure that side plate 11 has an end that touches back plate 12 and is bent inwardly into an L shape, while back plate 12 has a side-plate-side end that is obtained by hemming (folding back). In other words, the end of one of the panels may structurally be formed into the L shape, while the end of the other panel may be obtained by the hemming. In this case, back plate 12 having first ends 12a that are obtained by the hemming is a first panel, while side plates 11 having respective plate-shaped second ends 11a are second panels. The same goes for a connection between a top plate and side plate 11, a connection between a base plate and side plate 11, a connection between the top plate and back plate 12, and a connection between the base plate and back plate 12, so that one of the panels may structurally have an end bent into an L shape, while the other panel may have an end obtained by hemming.

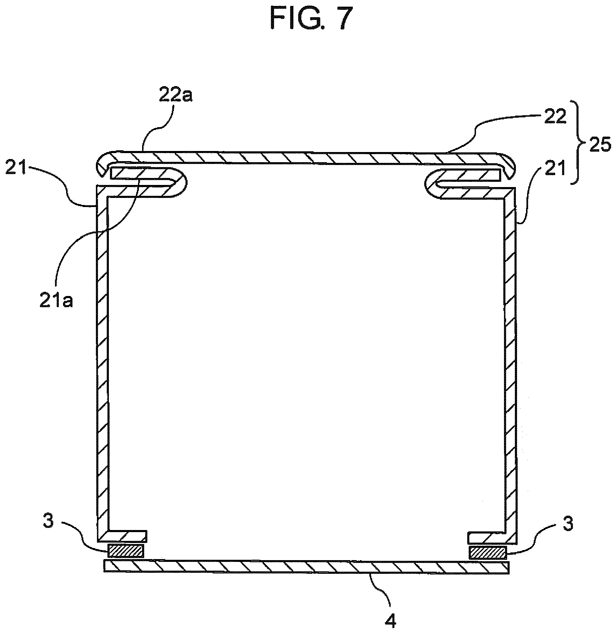

Housing 25 shown in FIG. 7 is such that an end of one panel is bent into an L shape with its leading end folded outward into a U shape by hemming (folding back) and is brought into contact with a plane of another panel to be fastened. Even with such a structure, similarly sufficient airtightness can be ensured.

In other words, either one of the two panels has only to be bent into the L shape for connection of those panels at substantially right angles, and a first panel of housing 25 may undergo the hemming (folding back) and may be brought into contact with the plane of a second panel of housing 25 to be fastened.

In the example shown in FIG. 7, the rear end of side plate 21 is bent inwardly into the L shape with its leading end folded outward (rearward) into the U shape by the hemming (folding back) and is brought into contact with the plane of back plate 22. A left and right end of back plate 22 are bent inward to be reinforced. In the structure shown in FIG. 7, side plates 21 having respective first ends 21a that are obtained by the hemming are the first panels, while back plate 22 having plate-shaped second ends 22a is the second panel.

It is to be noted that the sufficient airtightness of housing 25 that is mentioned here is designed in conformity with the EN standards to suppress a gas leak to not more than a predetermined condition and thus is not limited to an airtight state that is achieved by complete sealing.

As described above, the present invention is the power generator, and this power generator includes the housing that has the opening and accommodates a power generation device configured to generate power through use of raw fuel and oxidant gas, and the lid disposed to cover the opening of the housing. The housing includes the first panel having the first end that is obtained by the hemming, and the second panel having the second end that is plate-shaped, and the first panel and the second panel are disposed such that the first end and the second end touch each other. The first end and the second end are fixed to each other by the fastening member in the closely fitting manner through use of springiness of the first end obtained by the hemming.

In this structure, the connection between the panels that are not expected to separate during maintenance work can ensure sufficient airtightness of the housing with such a simple and low-cost structure because the first end of the first panel and the second end of the second panel are fixed to each other by the fastening member in the closely fitting manner through use of the springiness of the first panel's first end that is obtained by the hemming.

In addition, the present invention may include the seal that is annular and is disposed between the housing and the lid.

In this structure, the seal (for example, a gasket) is used between the lid and the housing for fixing in the closely fitting manner, so that even with an apparatus that often undergoes regular maintenance with its lid removed, a connection between panels that are not expected to separate can ensure sufficient airtightness of a housing with such a simple and low-cost structure while durability of airtight performance is ensured.

### INDUSTRIAL APPLICABILITY

According to the present invention described above, a connection between panels that are not expected to separate during maintenance work can ensure sufficient airtightness of a housing with a simple and low-cost structure.

As such, the present invention is useful because of being applicable to various kinds of indoor installations including a fuel cell power generator that generates power through reaction of hydrogen with oxygen.

### REFERENCE MARKS IN THE DRAWINGS

- 1, 11, 21:: side plate
- 1a, 12a, 21a:: first end
- 2, 12, 22:: back plate
- 2a, 11a, 22a:: second end
- 3:: seal
- 4:: lid
- 5, 15, 25, 101:: housing
- 6, 6a, 6b:: bolt
- 7:: frame
- 8:: nut
- 102:: base
- 103:: exterior panel
- 104:: top panel
- 104a:: end
- 105:: front panel
- 105a:: upper end
- 105b:: lower end

## Claims

1. A power generator comprising:
a housing (5) including a pair of side plates (1) made of metal, a back plate (2) made of metal, a top plate, a base plate and an opening, the housing (5) accommodating a fuel cell configured to generate power through use of raw fuel and oxidant gas; and
a lid (4) disposed to cover the opening of the housing (5),
wherein one of a first or a second panel is one of the side plates (1) or the back plate (2) and another one of the first and second panel is the other one of the side plates (1) or the back plate (2);
wherein the first panel (1) has a first end (1a) folded into an U-shape by means of hemming, the folded first end (1a) having an outer surface, and the second panel (2) has a second end (2a) that is plate-shaped, the second end (2a) being bent forwardly into an L shape so that an outer surface of the second end (2a) touches the outer surface of the first end (1a), and
wherein the first end (1a) and the second end (2a) are fixed to
each other with pressure applied by a fastening member in a closely fitting manner through use of springiness of the first end obtained by the hemming;
wherein the fastening member includes a bolt (6a) and a frame (7),
wherein the frame (7) is fixed to the inner surface of the forwardly bent (L) shape second end, and the bolt (6a) passes through the first end (1a), through the second end (2a), reaching the frame (7).

2. The power generator according to claim 1, further comprising a seal that is annular, the seal being disposed between the housing (5) and the lid (4).

## Patentansprüche

1. Stromerzeugungsvorrichtung, die umfasst:
ein Gehäuse (5), das ein Paar aus Metall bestehender seitlicher Platten (1), eine aus Metall bestehende hintere Platte (2), eine obere Platte, eine untere Platte sowie eine Öffnung enthält, wobei das Gehäuse (5) eine Brennstoffzelle aufnimmt, die zum Erzeugen von Strom unter Verwendung von Roh-Brennstoff und Oxidant-Gas ausgeführt ist; und
einen Deckel (4), der so angeordnet ist, dass er die Öffnung des Gehäuses (5) abdeckt,
wobei eine erste oder eine zweite Platte eine der seitlichen Platten (1) oder die hintere Platte (2) ist und eine andere von der ersten und der zweiten Platte die andere der seitlichen Platten (1) oder die hintere Platte (2) ist;
die erste Platte (1) ein erstes Ende (1a) aufweist, das durch Umschlagen in eine U-Form gefalzt ist, wobei das gefalzte erste Ende (1a) eine Außenfläche aufweist, und die zweite Platte (2) ein zweites Ende (2a) aufweist, das plattenförmig ist, wobei das zweite Ende (2a) in eine L-Form so nach vorn gebogen ist, dass eine Außenfläche des zweiten Endes (2a) die Außenfläche des ersten Endes (1a) berührt, und
das erste Ende (1a) und das zweite Ende (2a) mit Druck aneinander befestigt sind, der durch ein Befestigungselement enganliegend unter Nutzung von durch das Umschlagen erzielter Federkraft des ersten Endes ausgeübt wird;
das Befestigungselement einen Bolzen (6a) und einen Rahmen (7) enthält,
wobei der Rahmen (7) an der Innenfläche des in L-Form nach vorn gebogenen zweiten Endes befestigt ist und der Bolzen (6a) durch das erste Ende (1a), durch das zweite Ende (2a) hindurchtritt und bis zu dem Rahmen (7) reicht.

2. Stromerzeugungsvorrichtung nach Anspruch 1, die des Weiteren eine Dichtung umfasst, die ringförmig ist, wobei die Dichtung zwischen dem Gehäuse (5) und dem Deckel (4) angeordnet ist.

## Revendications

1. Générateur d'énergie comprenant :
un boîtier (5) comprenant une paire de plaques latérales (1) constituées de métal, une plaque arrière (2) constituée de métal, une plaque supérieure, une plaque de base et une ouverture, le boîtier (5) recevant une pile à combustible configurée pour générer de l'énergie en utilisant un combustible brut et un gaz oxydant ; et
un couvercle (4) disposé pour recouvrir l'ouverture du boîtier (5),
dans lequel l'un parmi un premier ou un second panneau est l'une des plaques latérales (1) ou la plaque arrière (2) et un autre des premier et second panneaux est l'autre des plaques latérales (1) ou la plaque arrière (2) ;
dans lequel le premier panneau (1) a une première extrémité (1a) pliée en une forme de U au moyen d'une formation d'ourlet, la première extrémité pliée (1a) ayant une surface extérieure, et le second panneau (2) a une seconde extrémité (2a) qui est en forme de plaque, la seconde extrémité (2a) étant incurvée vers l'avant en une forme de L de sorte qu'une surface extérieure de la seconde extrémité (2a) touche la surface extérieure de la première extrémité (1a), et
dans lequel la première extrémité (1a) et la seconde extrémité (2a) sont fixées l'une à l'autre avec une pression appliquée par un élément de fixation d'une manière étroitement ajustée en utilisant une élasticité de la première extrémité obtenue par la formation d'ourlet ;
dans lequel l'élément de fixation comprend un boulon (6a) et un cadre (7),
dans lequel le cadre (7) est fixé à la surface intérieure de la seconde extrémité à forme incurvée vers l'avant (L), et le boulon (6a) passe à travers la première extrémité (1a), à travers la seconde extrémité (2a), en atteignant le cadre (7).

2. Générateur d'énergie selon la revendication 1, comprenant en outre un joint qui est annulaire, le joint étant disposé entre le boîtier (5) et le couvercle (4).
